# EUROPÄISCHE PATENTSCHRIFT

(11) **EP 2 297 232 B1**
(45) Veröffentlichungstag und Bekanntmachung des Hinweises auf die Patenterteilung: **06.01.2016**
(21) Anmeldenummer: 09772377.9
(22) Anmeldetag: 26.06.2009
(51) Int. Cl.: C08J 3/22, C08K 5/00, B29C 47/10

(54) **VERFAHREN UND VORRICHTUNG ZUR HERSTELLUNG EINER VERNETZBAREN KAUTSCHUKMISCHUNG**
METHOD AND DEVICE FOR PRODUCING A CROSS-LINKABLE RUBBER MIXTURE
PROCÉDÉ ET DISPOSITIF POUR PRODUIRE UN MÉLANGE DE CAOUTCHOUC RÉTICULABLE

(30) Priorität: 03.07.2008 DE 102008040138
(43) Veröffentlichungstag der Anmeldung: 23.03.2011
(73) Patentinhaber: Rhein Chemie Rheinau GmbH, 68219 Mannheim (DE)
(72) Erfinder: BORKOWSKY, Anno, 64625 Bensheim (DE); SCHRÖDER, Andreas, 69469 Weinheim (DE); ISSEL, Hans-Martin, 69469 Weinheim (DE); FISCHER, Florian, 85560 Ebersberg (DE); UPHUS, Reinhard, 30419 Hannover (DE)
(74) Vertreter: Siegers, Britta
(86) Internationale Anmeldenummer: PCT/EP2009/058041
(87) Internationale Veröffentlichungsnummer: WO 2010/000677

(56) Entgegenhaltungen:
- EP-A1- 0 969 039
- WO-A-03/008175
- WO-A1-2004/039872
- CH-A- 536 655
- ROLAND SOMBORN: 'big bags', [Online] August 2006, RÖMPP Online, Version 3.15 Gefunden im Internet: <URL:http://www.roempp.com/> [gefunden am 2011-08-17]

## Beschreibung

Die Erfindung betrifft ein Verfahren zur Herstellung einer vernetzbaren Kautschukmischung für Fahrzeugreifen, Schläuche, Profile, Antriebselemente, das zumindest halbkontinuierlich durchgeführt werden kann sowie eine Vorrichtung zur Durchführung des Verfahrens. Homogene Kautschukmischungen im Sinne der Erfindung umfassen Polymere und deren Verschnitte, die nach Vernetzung elastische Eigenschaften aufweisen, wie Naturkautschuk (NR), Isoprenkautschuk (IR), Styrol-Butadien-Kautschuk (SBR), Butadienkautschuk (BR), Isopren-Isobutylen-Kautschuk (IHR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxyliertere Acrylnitril-Butadien-Kautschuk(HXNBR), Ethylen-Propylen-Dien-Kautschuk (EPDM), Ethylen-Propylen-Kautschuk (EPM), Fluorkautschuk (FKM), Perfluorierter Fluorkautschuk (FFKM), Acrylat-Ethylen-Kautschuk (AEM), Acrylatkautschuk (ACM), chloriertes Polyethylen, chlorsulfoniertes Polyethylen, Ethylen-Vinylacetat-Kautschuk (EVA), Siliconkautschuk, Fluro-Silicon-Kautschuk, Ethylen-Epichlorhydrin Kautschuk (ECO), Epichlorhydrin-Kautschuk (CO), Polyurethan-Kautschuk (PU).

Weitere Bestandteile der Kautschukmischungen sind insbesondere helle anorganische Füllstoffe, wie Glimmer, Kaolin, Kieselerde, Kieselsäure, Kreide, Talkum,Kohlenstoff-Füllstoffe, wie Ruß, Graphit, Carbon Nanotubes und/oder magnetische Füllstoffe wie Carbonyl-Eisenpulver, Eisenoxide, Vernetzungsmittel wie Schwefel, Peroxide, Metalloxide, Fettsäuren, Beschleuniger, wie Dithiocarbamate (Zink Dimethyldithiocarbamat, wie z.B. PERKACIT ZDMC der Fa. Flexsys, Zink Diethyldithiocarbamat, wie z.B. PERKACIT ZDEC der Fa. Flexsys, Dibutyldithiocarbamate wie z.B. PERKACIT Zink Dibutyldithiocarbamat ZDBC der Fa. Flexsys, etc.), Thiurame (Tetramethylthiuramdisulfid (TMTD), Tetramethylthiurammonosulfid (TMTM), Tetraethylthiuramdisulfid (TETD), Bis(pentamethylene)thiuram tetrasulfide DPTT, etc.), Thioharnstoffe (Ethylenthioharnstoff (ETU), N,N,N'N'-Tetramethylthioharnstoff (TMTU), Diethylthioharnstoff (DETU), Dibutylthioharnstoff (DBTU), etc.), Mercaptobeschleuniger (2-Mercapto-benzothiazol (MBT), Mercapto benzothiazyl disulphid (MBTS), Zincmercaptobenzothiazol (ZMBT) Sulfenamide (N'-Cyclohexylbenzotihiazol-2-sulfenamid (CBS), N-tert-Butyl-2-benzothiazol-sulfenamid (TBBS), 2-Morpholin-benzothiazolsulfenamid (MBS), etc.), Thiophosphat-und Dithiophosphat - Beschleuniger wie Zink-O,O-di-n-butyl-dithiophosphat (ZBDP), Zink-O-butyl-O-hexyl-dithiophosphat, Zink-O,O-diisooctyl-dithiophosphat, wie z.B. die Rhenogran®-Typen ZDT, ZAT, ZBOP der Firma Rhein Chemie Rheinau GmbH, etc. (ZOPD), Dodecylammonium-diisooctyl-dithiophosphat (AOPD), sowie Guanidine (Diphenylguanidin (DPG), N',N-di-ortho-tolyl -Guanidine (DOTG), etc.) und/ oder verfärbende und nicht verfärbende Alterungsschutzmittel, wie Paraphenylendiamine (Isopropylphenylparaphenylendiamin (IPPD), Para-Phenylen-Diamin (6PPD), N,N-ditolyl-p-phenylendiamine (DTPD), etc.), Amine (Trimethyl-1,2-dihydrochinolin (TMQ), [Phenyl)amine]-1,4-naphthalendion (PAN), Bis(4-octylphenyl)amin (ODPA), styrolisiertes Diphenylamin (SDPA), etc. ), Mono- und Bisphenole , wie z.B. die Vulkanox Typen 2,2'-Methylen-bis-(4-methyl-6-tert.butylphenol (BPH), 2,2'-Isobutyliden-bis-(4,6-dimelhyl-phenol) (NKF), 2,2'-Dicyclo-pentadienyl-bis-(4-methyl-6-tert.-butyl-phenol) (SKF), 2,2'-Methylen-bis-(4-methyl-6-cyclohexyl-phenol (ZKF), 2,6-Di-tert.-butyl-p-kresol(BHT), subtituiertes Phenol (DS), styrolisierte Phenole (SPH), Mercatobenzimidazole (2-Mercaptobenzimidazol (MBI), 2-Mercaptomethylbenzimidazole (MMBI), Zinc-4- und -5-methyl-2-mercapto-benzimidazol- (ZMMBI), etc.) und Olefine, und/oder paraffinische und aromatische Weichmacher.

Nach dem Stand der Technik wird üblicherweise in einem ersten Schritt ein Mischer mit Kautschuk, Füllstoffen, Weichmachern sowie thermisch und chemisch stabilisierende Zusätzen gefüllt. Das Mischgut wird im Mischer gemischt. Nach Abschluss des Mischvorgangs wird die so hergestellte Mischung - nachfolgend Grundmischung genannt - entnommen. Die entnommene Grundmischung wird anschließend ausgewalzt und die ausgewalzte Grundmischung in gewünschter Größe lappenförmig oder mattenförmig ausgeschnitten. Die Mischung wird entweder direkt weiterverarbeitet oder vor der Weiterverarbeitung gelagert. Bei Lagerung werden die durch das Auswalzen erhaltenen lappenförmig oder mattenförmig ausgeschnittenen Mischungsfelle (oder eine andere Lagerungsform) mit Trennmitteln überzogen und zunächst gestapelt. Vor der Weiterverarbeitung zum fertigen Bauteil wird die Grundmischung beschleunigt. Unter Beschleunigen ist zu verstehen, dass Vernetzungsmittel und Beschleuniger hinzugefügt werden, um den Kautschuk schnell vernetzen zu können. Als Vernetzungsmittel würde Schwefel genügen, um eine Vernetzung des Kautschuks herbeiführen zu können. Allerdings würde das Vernetzen dann sehr lange dauern und zwar in der Regel mehrere Tage. Um das Vernetzen zu beschleunigen, werden weitere Chemikalien oder Substanzen hinzugefügt, auch Beschleuniger genannt, die die Vernetzung zu beschleunigen vermögen, und zwar insbesondere durch Erwärmen der Mischung auf hinreichend hohe Temperaturen, die in der Regel oberhalb von 120°C, vorzugsweise 150°C liegen. Es gibt aber auch bei Raumtemperatur vulkanisierende bzw. vernetzende Mischungen. Wird die Mischung auf die entsprechenden Temperaturen erwärmt, so vernetzt die Mischung in wenigen Minuten. Problematisch ist dann aber auch, dass eine solche Mischung bestehend aus der Grundmischung und den Vernetzungsmitteln reaktionsfähig ist und daher vor der Verarbeitung zum Endprodukt nicht zu sehr erwärmt werden darf. Insbesondere dürfen keine Temperaturen von mehr als 120 °C, vorzugsweise 100°C auftreten. Außerdem dürfen die Temperaturen längerfristig in der Regel 50°C nicht übersteigen. Andernfalls vernetzt die Mischung vorzeitig und ist damit unbrauchbar. Aus diesem Grund wird die batchweise hergestellte Grundmischung in der Regel erst einmal gelagert und so abgekühlt und zu einem späteren Zeitpunkt mit Vernetzungsmitteln vermischt.

Der Anteil der Vernetzungsmittel an der Mischung beträgt regelmäßig weniger als 20 Gewichtsprozent.

Nach dem heute üblichen Stand der Technik werden Vernetzungsmittel mit der Grundmischung mithilfe einer Doppelwalze oder Walze, Innenmischer vermischt. Die Grundmischung wird zusammen mit Vernetzungsmitteln einer Doppelwalze zugeführt. Von der Walze werden einzelne Bereiche des Mischguts nach dem Passieren des Spalts, der durch die beiden Walzen gebildet wird, eingeschnitten oder herausgeschnitten und dem Spalt der Doppelwalze wieder zugeführt, um so die Vernetzungsmittel mit der Grundmischung zu vermischen. Die Zuführung des Mischguts sowie das Herausschneiden von Mischgut wird manuell durchgeführt. Die einzelnen Vernetzungsmittel werden für die Zuführung einzeln manuell verwogen. Die einzelnen Vernetzungsmittel werden getrennt voneinander manuell nach dem jeweiligen Auswiegen hinzugefügt.

Das Mischen mithilfe einer Doppelwalze trägt dazu bei, dass sich die Mischung nicht zu sehr erwärmen kann, was ein vorzeitiges Vernetzen zur Folge hätte. Eine Doppelwalze nimmt allerdings relativ viel Platz ein. Der Platzbedarf der Doppelwalze beträgt bereits mehrere Quadratmeter. Im Mischsaal, in dem dieses Verfahren durchgeführt wird, muss ferner eine Wiegeeinrichtung vorhanden sein, um die Vernetzungsmittel wiegen zu können. Es muss weiter hinreichend viel Platz zur Verfügung stehen, damit wenigstens eine Person das Wiegen und Mischen ungehindert und sicher durchführen kann.

Problematisch ist im Zusammenhang mit den Vernetzungsmitteln, dass relativ kleine Mengen an Vernetzungsmitteln einzeln durch Wiegen dosiert werden, was zu relativ großen Abweichungen der dosierten Mengen führt. Werden beispielsweise fünf Komponenten à 100 Gramm benötigt, so können in fünf Fällen Wiegefehler bzw. menschliches Versagen zu ungenauer Dosierung führen. Das Verfahren ist bereits aus diesem Grund fehteranfällig. Außerdem ist es schwierig, derart geringe Mengen hinreichend genau abzuwiegen. Weiter ist es leicht möglich, dass die Vernetzungsmittel beispielsweise durch Licht, Feuchtigkeit oder Fremdkörper kontaminiert werden, was zur Unbrauchbarkeit der damit hergestellten Mischung führen kann. Die Vernetzungsmittel können umweltschädlich sein, so dass auch die Umgebung durch die Vernetzungsmittel kontaminiert werden kann.

Nach dem Mischen mit einer Doppelwalze liegt die so erhaltene Mischung plattenförmig oder fellartig vor. Gegebenfalls werden diese Platten bzw. Mischungsfelle in eine andere für die Weiterverarbeitung tauglichere Verarbeitungsform (z.B. Streifen) überführt. Häufig werden die Mischungen vor Weiterverarbeitung erneut zwischengelagert, was insbesondere damit zusammenhängt, dass batchweise gemischt wird. Die Mischungsfelle können aber auch umgehend ohne weitere Zwischenlagerung weiterverarbeitet werden.

Regelmäßig finden nach dem Stand der Technik Qualitätskontrollen statt. Zu diesem Zweck wird ein beispielsweise münzengroßes Stück aus einer Platte ausgeschnitten. Dieses münzengroße Stück wird untersucht und zwar insbesondere das Vernetzungsverhalten. Dies geschieht mithilfe eines Vulkameters. Zusätzlich können aus der zu prüfenden Mischung Anteile herausgeschnitten und zu Platten vernetzt werden. Aus den so hergestellten Platten können Zugprüfstäbchen (z.B. S2) ausgestanzt werden, mit denen anschließend Zugversuche durchgeführt werden.

Fallen die Ergebnisse der Untersuchungen unbefriedigend aus, so wird eine hergestellte Mischung nicht freigegeben. Die Mischung wird nicht weiter verarbeitet oder gelangt nicht in den Verkauf. Bei diesen Qualitätskontrollen besteht allerdings das Problem, dass es praktisch nicht möglich ist, eine 100%ig homogene Mischung zu erhalten. Aus diesem Grund kann zwar eine Mischung insgesamt den Qualitätsanforderungen genügen. Wurde aber die Qualitätskontrolle mit einem Ausschnitt durchgeführt, der nur aufgrund einer Schwankung den Anforderungen nicht genügt, so wird die gesamte Mischung verworfen, obwohl insgesamt die erforderliche Qualität erreicht wurde. Die üblichen Qualitätskontrollen weisen also auch den Nachteil auf, lediglich stichprobenhaft die Mischung zu untersuchen.

Diese aus dem Stand der Technik bekannten Qualitätskontrollen ermitteln nicht unmittelbar die Homogenität der hergestellten Mischung. Es werden stattdessen verschiedene physikalische Eigenschaften der Mischung ermittelt. Aus den so erhaltenen Ergebnissen wird auf die Homogenität der Mischung geschlossen. Wünschenswert wäre, die Homogenität unmittelbar und nicht aufgrund von verschiedenen Anhaltspunkten bestimmen zu können, um so schneller und zuverlässiger Qualitätskontrollen durchführen zu können.

Problematisch an dem Stand der Technik ist ferner, dass zu einem sehr späten Zeitpunkt des Herstellungsverfahrens, nämlich nach Abschluss des Verfahrens festgestellt wird, ob eine Mischung in den Verkauf gelangen kann. Die mit einem Verwerfen einer Mischung einhergehenden finanziellen Verluste sind deshalb besonders hoch.

Die Nachteile des beschriebenen Standes der Technik liegen also in den hohen Kosten, dem hohen Personalaufwand und der Störanfälligkeit. Es ist daher schon oft versucht worden, die Herstellung solcher Kautschukmischungen kontinuierlich durchzuführen und insofern zu automatisieren. Es ist jedoch nicht gelungen, befriedigende Ergebnisse zu erhalten. Aus diesem Grunde wird in der Praxis fast ausschließlich das eingangs genannte diskontinuierliche Verfahren für die Herstellung von Kautschukmischungen angewendet, wie beispielsweise der US 2004140583 A1 zu entnehmen ist. In CH536655 wird ebenfalls ein Verfahren zur Herstellung einer vernetzbaren Kautschukmischung beschrieben, bei dem die Vernetzungsmittel mit einer Grundmischung, die Kautschuk enthält, vermischt werden.

Zwar wird gemäß der US 2004140583 A1 vorgeschlagen, Kautschukmischungen mittels eines Doppelschneckenextruders kontinuierlich herzustellen, dem der Kautschuk mit Hilfe einer Zahnradpumpe zugeführt wird. Aber auch dieser Vorschlag hat nichts daran ändern können, dass Kautschukmischungen bis heute praktisch ausschließlich diskontinuierlich hergestellt werden.

Aus der DE-PS 37 29 237 geht ein Verfahren hervor, bei dem Kautschuk in einem Doppelschneckenextruder mit Füllstoffen, Ölen, Hilfsstoffen und Vernetzungsmitteln kontinuierlich zu einer Kautschukmischung verarbeitet wird. Der US 5262111A ist aber bereits zu entnehmen, dass dieses Verfahren bereits daran gescheitert ist, dass zu langwierig homogenisiert werden musste. Zwar wird gemäß der US 5262111 A vorgeschlagen, diese Probleme durch eine zweistufige Zugabe von Rußanteilen zu lösen und die Mischung mit einem Doppelschneckenextruder herzustellen. Obwohl diese Lehre inzwischen seit mehr als 15 Jahren bekannt ist, hat sich auch dieses Verfahren in der Praxis als unzureichend erwiesen.

Die Druckschrift EP 0 490 056 A1 bestätigt im Jahr 1991, dass Kautschukmischungen nahezu ausschließlich in Innenmischern und damit diskontinuierlich hergestellt werden, da die vielen mit der Herstellung einer Kautschukmischung verbunden, sehr speziellen Probleme nicht gelöst werden konnten. Zwar schlägt die EP 0 490 056 A1 vor, einen Doppelschneckenextruder, in dem gemischt wird, zu kühlen, um so nach Zugabe von Vernetzungsmitteln ein Vulkanisieren bzw. Vernetzen der Mischung zu vermeiden. Allerdings ist es nicht möglich, den Innenraum eines Doppelwellenextruder hinreichend zu kühlen, da eine Kühlung nur von außen möglich ist. Auch dieser Vorschlag konnte daher nichts daran ändern, dass in der Praxis nach wie vor diskontinuierlich hergestellt wird.

Aus EP0969039 ist eine mehrstufige Herstellungsmethode von Kautschukmischungen bekannt. Dabei werden zwei Kautschukmischungen mittels Kneter hergestellt und später miteinander compoundiert. Auch wenn eine kontinuierliche Verarbeitung als vorteilhaft beschrieben wird, wird dennoch ausdrücklich darauf hingewiesen, dass auch eine diskontinuierliche Prozeßführung unter Verwendung von Knetern und Mischern möglich ist. Ein besonderer Temperaturbereich bei dem Mischen wird jedoch nicht eingehalten.

Es gibt zahllose weitere Vorschläge und Versuche, Kautschukmischungen kontinuierlich herzustellen. Dennoch sehen sich die Hersteller solcher Kautschukmischungen in der Praxis unverändert gezwungen, diskontinuierlich in der eingangs beschriebenen Weise herzustellen.

Aufgabe der vorliegenden Erfindung ist es, ein praktikables Verfahren zu schaffen, welches leistungsfähiger als das bekannte diskontinuierliche Verfahren ist.

Der vorliegenden Erfindung liegt die Erkenntnis zugrunde, dass die aus dem Stand der Technik bekannten Versuche, dass eingangs genannte diskontinuierliche Verfahren kontinuierlich durchzuführen, vor allem an dem Problem gescheitert sind, dass die Vernetzungsmittel schnell homogen mit der Grundmischung, auch Kautschukgrundmischung genannt, vermischt werden müssen, ohne dass es dabei aufgrund von zu hohen Temperaturen (T > 120°C, vorzugsweise 100°C) des aus der Grundmischung und den Vernetzungsmitteln bestehenden Mischgutes zu einer Anvernetzung kommt. Erfindungsgemäß wurde daher der Schwerpunkt darauf gelegt, die Grundmischung mit den Vernetzungsmitteln zuverlässig homogene und kontinuierlich zu vermischen und die Mischdauer zu minimieren.

Gegenstand der vorliegenden Erfindung ist daher ein neues Verfahren zur Herstellung einer vernetzbaren Kautschukmischung, bei dem Vernetzungsmittel für das Vernetzen so miteinander vermischt werden, so dass eine Schmelzpunkterniedrigung auf weniger als 120°C erfolgt und anschließend die miteinander vermischten Vernetzungsmittel mit einer diskontinuierlich hergestellten Grundmischung, die Kautschuk enthalt, vermischt werden, wobei während des Mischens mit der Grundmischung Temperaturen erzeugt werden, die oberhalb dieser Schmelztemperatur und unterhalb von 150°C liegen.

Eine erste Maßnahme für das Erreichen des angestrebten Ziels besteht darin, die Vernetzungsmittel erst miteinander zu vermischen, bevor diese mit der Grundmischung vermischt werden. Vernetzungsmittel können unproblematisch miteinander bei niedrigen Temperaturen (T ≤ 100°C) vermischt werden. so dass keine Reaktion der Vernetzungschemikalien während des Vermischens stattfindet. Es kann daher problemlos eine sehr homogene Mischung der Vernetzungsmittel hergestellt werden. Zudem wird durch diese Maßnahme das Mischen der Grundmischung mit den Vernetzungsmitteln beschleunigt, da die Vernetzungsmittel bereits homogen miteinander vermischt sind. Da die Vernetzungsmittel bereits homogen miteinander vermischt sind, wird dadurch außerdem verbessert eine homogene Verteilung der Vernetzungsmittel in der Grundmischung sichergestellt. Insgesamt kann so die Gefahr vermindert werden, dass die angestrebte kontinuierliche Herstellung in der Praxis an dem Mischen der Grundmischung mit den Vernetzungsmitteln scheitert.

Vernetzbare Kautschukmischungen im Sinne der Erfindung umfassen Polymere und deren Verschnitte, die nach Vernetzung elastische Eigenschaften aufweisen, wie Naturkautschuk (NR), Isoprenkautschuk (IR), Styrol-Butadien-Kautschuk (SBR), Butadienkautschuk (BR), Isopren-Isobutylen-Kautschuk (IR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxyliertere Acrylnitril-Butadien-Kautschuk (HXNBR), Ethylen-Propylen-Dien-Kautschuk (EPDM), Ethylen-Propylen-Kautschuk (EPM), Fluorkautschuk (FKM), Perfluorierter Fluorkautschuk (FFKM), Acrylat-Ethylen-Kautschuk (AEM), Acrylatkautschuk (ACM), chloriertes Polyethylen, chlorsulfoniertes Polyethylen, Ethylen-Vinylacetat-Kautschuk (EVA), Siliconkautschuk, Fluoro-Silicon-Kautschuk, Ethylen-Epichlorhydrin Kautschuk (ECO), Epichlorhydrin-Kautschuk (CO), Polyurethan-Kautschuk (PU).

In einer weiteren Ausführungsform des erfindungsgemäßen Verfahrens enthalten die miteinander vermischen Vernetzungsmittel Zinkoxid, Benzothiazyl-2-cyclohexyl-sulfenamid (CBS) und/oder Mercapto-benzothidzyldisulphid (MBTS).

Grundsätzlich umfassen erfindungsgemäße Vernetzungsmittelmischungen Vernetzungsmittel wie Schwefel, Peroxide, Metalloxide, Fettsäuren, Beschleuniger, wie Dithiocarbamate, wie Zink Dimethyldithiocarbamat, wie z.B. PERKACIT ZDMC der Fa. Flexsys, Zink Diethyldithiocarbarmat, wie PERKACIT ZDEC der Fa. Flexsys, Dibutyldithiocarbamate, wie das Zink Dibutyldithiocarbamat PERKACIT ZDBC der Fa. Flexsys, etc., Thiurame, wie z.B. Tetramethylthiuramdisulfid (TMTD), Tetramethylthiurammonosulfid (TMTM), Tetraethylthiuramdisulfid (TETD), Bis(pentamethylene)thiuram tetrasulfide (DPTT), Thioharnstoffe, wie z.B. Ethylenthioharnstoff (ETU), N,N,N'N'-Tetramethylthioharnstoff (TMTU), Diethylthioharnstoff (DETU), Dibutylthioharnstoff (DBTU), etc.), Mercaptobeschleuniger, wie z.B. 2-Mercapto-benzothiazol (MBT), Mercapto-benzothiazyldisulphid (MBTS), Zincmercaptobenzöthiazol (ZMBT), Sulfonamide (N'-Cyclohexylbenzothiazol-2-sulfenamid (CBS), N-tert-Butyl-2-benzothiazol-sulfenamid (TBBS), 2-Morpholin-benzothiazolsulfenamid (MBS), etc.), Thiophosphat-und Dithiophosphat - Beschleuniger wie Zink-O,O-di-n-butyl-dithiophosphat (ZBDP), Zink-O-butyl-O-hexyl-dithiophosphat, Zink-O,O-diisooctyl-dithiophosphat (ZOPD), Dodecylammonium-diisooctyl-dithiophosphat(AOPD), wie z.B.die Rhenogran®-Typen ZDT, ZAT, ZBOP der Firma Rhein Chemie Rheinau GmbH, etc., Guanidine, wie z.B.Diphenylguanidin (DPG) und/oder N',N-di-ortho-tolyl -Guanidine (DOTG), etc., verfärbende und nicht verfärbende Alterungsschutzmittel wie Paraphenylendiamine, Isopropylphenylparaphenylendiamin (IPPD), Para-Phenylen-Diamin (6PPD), N,N-ditoly-p-phenylendiamine (DTPD), etc., , Amine (Trimethyl-1,2-dihydrochinolin (TMQ), (Phenyl)amine]-1,4-naphthalendion (PAN), Bis(4-octylphenyl)amin (ODPA), styrolisiertes Diphenylamin (SDPA), etc. ), Mono- und Bisphenole, wie z.B. 2,2'-Methylen-bis-(4-methyl-6-tert.butylphenol(BPH), 2,2-Isobutyliden-bis-(4,6-dimethyl-phenol) (NKF), 2,2'-Dicyclo-pentadienyl-bis-(4-methyl-6-tert.-butyl-phenol)(SKF), 2,2'-Methylen-bis-(4-methyl-6-cyclohexyl-phenol (ZKF), 2,6-Di-tert.-butyl-p-kresol (BHT), substituiertes Phenol (DS), styrolisierte Phenole (SPH), Mercatpbenzimidazole, wie z.B.2-Mercaptobenzimidazol (MBI), 2-Mercaptomethylbenzimidazole (MMBI), Zinc-4- und -5-methyl-2-mercapto-benzimidazole (ZMMBI), etc., Olefine, paraffinische und/oder aromatische Weichmacher. Die Zusammensetzung wird dabei auf das gewünschte Endprodukt abgestimmt.

Typische Komponenten einer aus Vernetzungsmitteln bestehenden erfindungsgemäßen Mischung sind Zinkoxid, Schwefel, CBS (Cyclohexyl-Benzozthiazyl-Sulfenamid) sowie MBTS (Methylbenzothiazyldisulfid) sowie EPDM, EVA, Weichmacher, etc. als Kautschukbinder. Der Schmelzpunkt von Schwefel liegt bei ca. 115 °C, der Schmelzpunkt von CBS bei ca. 140 °C und der Schmelzpunkt von MBTS bei ca. 180 °C.

In einer bevorzugten Ausführungsform des erfindungsgemäßen Verfahrens werden Mischungen aus Vernetzungsmitteln eingesetzt, bei der die miteinander vermischten Vernetzungsmittel bei Temperaturen unterhalb von 100°C schmelzen, wobei während des Mischens mit der Grundmischung Temperaturen erzeugt werden, die oberhalb dieser Schmelztemperatur und unterhalb 150°C, vorzugsweise unterhalb von 100°C liegen.

Es wurde festgestellt, dass aufgrund der Mischung die Komponenten Schwefel, CBS und MBTS bereits bei ca. 90 °C schmelzen können. Durch das Mischen gelingt allgemein eine Schmelzpunkterniedrigung, die regelmäßig weniger als 120°C, vorzugsweise 100°C beträgt. In einer vorteilhaften Ausgestaltung des Verfahrens wird daher die Rohmischung mit den Vernetzungsmitteln so gemischt, dass eine Temperatur entsteht, die oberhalb einer Schmelztemperatur der Mischung liegt und unterhalb der Temperatur, ab der die Mischung durch das Mischen und die dabei entstehenden Temperaturen zu vernetzen droht. Geeignete Temperaturen liegen regelmäßig zwischen 90 und 120°C, vorzugsweise 90 und 100 °C. Schmelzen Vernetzungsmittel während des Mischen mit der Grundmischung, so kann dadurch verbessert das Ziel erreicht werden, die Vernetzungsmittel schnell und homogen in der Grundmischung zu verteilen, um so zumindest das Mischen der Grundmischung mit den Vernetzungsmitteln automatisiert durchführen zu können. Wird schnell genug gemischt, so sind Temperaturen oberhalb von 50°C unproblematisch.

In einer bevorzugten Ausführungsform des erfindungsgemäßen Verfahrens wird die Grundmischung abgekühlt, bevor diese mit den Vernetzungsmitteln gemischt wird und zwar insbesondere auf weniger als 120°C, bevorzugt weniger als 100°C, ganz besonders bevorzugt weniger als 50°C.

In einer Ausführungsform der Erfindung werden die Vernetzungsmittel vor dem Mischen mit der Grundmischung mit Polymeren umhüllt. Besonders geeignete Polymere sind solche, die eine vergleichbare Grenzflächenspannung und/oder eine vergleichbare Polarität aufweisen, wie die Grundmischung. Indem so eine Angleichung der Grenzflächenspannungen und/ oder Polaritäten erreicht wird, gelingt es das aus der Grundmischung und den Vernetzungsmitteln bestehende Mischgut zuverlässiger und damit homogener und schneller miteinander zu vermischen.

In einer bevorzugten Ausführungsform des erfindungsgemäßen Verfahrens werden daher die Vernetzungsmittel für das Vernetzen mit einer Mischung aus Polymeren umhüllt und die mit Polymeren umhüllten Vernetzungsmittel mit einer Grundmischung, die Kautschuk enthält, gemischt.

Vorteilhaft werden die Polymere so ausgesucht, dass sich die Schmelzpunkte, Kristallinität und/ oder Oberflächenstrukturen der Polymere und der Grundmischung ähneln, um so das Mischen zu verbessern, also um ein homogenes Mischergebnis schnell zu erhalten.

Als Polymere eignen sich insbesondere Naturkautschuk (NR), Isoprenkautschuk (IR), Styrol-Butadien-Kautschuk (SBR), Butadienkautschuk (BR), Isopren-isobutylen-Kautschuk (IR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxyliertere Acrylnitril-Butadien-Kautschuk (HXNBR), Ethylen-Propylen-Dien-Kautschuk (EPDM), Ethylen-Propylen-Kautschuk (EPM), Fluorkautschuk (FKM), Perfluorierter Fluorkautschuk (FFKM), Acrylat-Ethylen-Kautschuk (AEM), Acrylatkautschuk (ACM), chloriertes Polyethylen, chlorsulfoniertes Polyethylen, Ethylen-Vinylacetat-Kautschuk (EVA), Siliconkautschuk, Fluro-Silicon-Kautschuk, Ethylen-Epichlorhydrin Kautschuk (ECO), Epichlorhydrin-Kautschuk (CO), polyurethan-Kautschuk (PU).

Zunächst werden in einer Ausführungsform der Erfindung die Vernetzungsmittel gemischt. Die miteinander vermischten Vernetzungsmittel werden dann mit einem oder mehreren polymeren Bindern in einem Mischaggregat (.so zum Beispiel Kneter, Walze, Extruder, etc.) gemischt. Die Temperatur wird dabei so kontrolliert, dass keine Vernetzung des jeweils verwendeten Polymers stattfindet.

In einer bevorzugten Ausführungsform des erfindungsgemäßen Verfahrens wird die Grundmischung diskontinuierlich hergestellt.

In einer Ausführungsform der Erfindung werden die Vernetzungsmittel mit hohem Druck in die Grundmischung eingebracht, die dabei insbesondere vergleichsweise drucklos gefördert wird. Ein hoher Druck im Sinne der vorliegenden Erfindung beträgt insbesondere mehrere 10 bar, vorzugsweise wenigstens 50 bar, besonders bevorzugt wenigstens 100 bar. Hierdurch wird erreicht, dass allein aufgrund des hohen Zufuhrdrucks sofort Vernetzungsmittel in der Rohmischung durch Verwirbelung verteilt werden, was dazu beiträgt, dass schnell eine homogene Mischung hergestellt wird.

In einer bevorzugten Ausführungsform der Erfindung werden die Vernetzungsmittel für das Vernetzen einer Mischung mit einem hohem Druck von vorzugsweise wenigstens 50 bar in eine Grundmischung gepumpt, die Kautschuk enthält, und wird anschließend die Grundmischung mit den Vernetzungsmitteln in einer Mischvorrichtung gemischt.

Vorzugsweise wird die Grundmischung in einem Extruder mit vorzugsweise nur einer Welle transportiert, während die Vernetzungsmittel mit hohem Druck in die Grundmischung gepumpt werden. Durch den großen Druckunterschied entsteht eine Verwirbelung. Ein weiteres Vermischen mit Hilfe des Extruders kann entsprechend verkürzt werden.

In einer Ausführungsform der Erfindung werden die Vernetzungsmittel mit einer Zahnradpumpe in die Grundmischung gepumpt. Mit Hilfe einer Zahnradpumpe kann einerseits der gewünschte hohe Druck erzeugt und andererseits geeignet dosiert zugeführt werden.

In einer weiteren Ausführungsform der Erfindung werden die miteinander vermischten Vernetzungsmittel in einen Behälter gefüllt, der Behälter verschlossen, der verschlossene Behälter mit einer Vorrichtung für das Mischen der Grundmischung mit den Vernetzungsmitteln verbunden und geöffnet, die Vernetzungsmittel aus dem Behälter der Grundmischung zugeführt und die zugeführten Vernetzungsmittel mit der Grundmischung vermischt.

In einer Ausführungsform der Erfindung befinden sich die Vernetzungsmittel in einem zunächst geschlossenen Behälter, der mit einer Dosier- und Zuführungsvorrichtung verbunden und dabei geeignet geöffnet wird, um die Vernetzungsmittel in Richtung Grundmischung zu transportieren. Wenn die Vernetzungsmittel bereits gemischt sind, ist es problemlos möglich, diese Mischung zunächst in einem Behälter aufzubewahren und dann mit Hilfe der Dosier- und Zuführungsvorrichtung, so zum Beispiel mit einer Zahnradpumpe der Grundmischung dosiert zuzuführen. Durch diese Ausführungsform werden Kontaminationen der Mischung vermieden. Auch wird die Umwelt vor einer Kontamination durch die Vernetzungsmittel geschützt. Da das Mischen und anschließendes Verpacken der Vernetzungsmittel nebst Durchführung von Qualitätskontrollen großtechnisch durchgeführt werden kann, werden die eingangs genannten Fehler, die durch ein manuelles Wiegen der einzelnen Komponenten auftreten können, vermieden oder zumindest minimiert.

Um ein kontinuierliches Mischen der Rohmischung mit den Vernetzungsmitteln sicherzustellen, ist der Behälter mit einem Detektor versehen, mit dem der Füllstand bzw. der Grad der Entleerung ermittelt wird. Diese Information kann dazu genutzt werden, rechtzeitig den Austausch des Behälters vorzubereiten, um so das kontinuierliche Mischen von Grundmischung mit den Vernetzungsmitteln sicherzustellen.

Daher ist es bevorzugt, dass der Füllstand des Behälters während des Zuführens mit einem Detektor überwacht wird.

In einer Ausführungsform der Erfindung ist der vorgenannte Detektor mit Mitteln versehen, die eine weitere Entleerung des Behälters in Abhängigkeit vom Detektorsignal verhindern. Es kann so vermieden werden, dass aufgrund zu geringer Restmengen Dosierungsfehler auftreten.

In einer Ausführungsform der Erfindung sind die Behälter mit elektronischen Speichermitteln wie einem RFID-Chip (Radio Frequency IDentification) versehen, mit denen Informationen über den Inhalt des Behälters elektronisch gespeichert und ausgelesen werden können. Herstellungsfehler können so weiter vermieden werden, beispielsweise indem entsprechende Auslese- und Kontrollvorrichtungen vorgesehen werden, die während der Zufuhr der Vernetzungsmittel die Informationen auslesen und kontrollieren. So kann beispielsweise kontrolliert werden, ob ein Haltbarkeitsdatum überschritten wurde oder ob sich im Behälter der gewünschte Inhalt befindet. Produktionsfehler können so vermieden werden. Werden Informationen ausgelesen, die darauf hindeuten, dass mit erhöhtem Risiko Produktionsfehler auftreten können, so wird in einer Ausführungsform der Erfindung die Zufuhr von Vernetzungsmitteln automatisiert verhindert.

Ein RFID-Chip hat den Vorteil, ohne Energiezufuhr betrieben und drahtlos ausgelesen werden zu können. Es können aber auch andere Speicherelemente wie zum Beispiel Flash-Speicherelemente eingesetzt werden, die über eine Kabelverbindung ausgelesen werden. Der Behälter ist dann beispielsweise mit einem Stecker versehen, an den ein Kabel angeschlossen werden muss, um so das Auslesen von Informationen zu ermöglichen.

Das Speicherelement kann auch Informationen über den jeweiligen Füllstand des Behälters enthalten, die beispielsweise durch den genannten Detektor erhalten wurden. So kann bei einem mehrfachen Austausch vermieden werden, dass versehentlich zu stark entleerte Behälter gewählt werden.

Nach dem erfindungsgemäßen Verfahren ist es möglich und auch bevorzugt, dass der Behälter in Abhängigkeit von dem Detektorsignal geschlossen wird.

Des Weiteren ist es bei dem erfindungsgemäßen Verfahren möglich und auch bevorzugt, dass der Behälter auch Mittel für die elektronische Speicherung von Daten enthält und so Informationen über den Inhalt des Behälters elektronisch gespeichert sind, und die Daten vor der Zuführung von Vernetzungsmitteln zur Grundmischung ausgelesen und kontrolliert werden.

In einer Ausgestaltung des Verfahrens wird stets die gleiche Grundmischung verwendet. Ein Produktwechsel wird allein durch Änderung der Vernetzungsmittel bewirkt. Produktwechsel können nun vor allem dann sehr schnell und zuverlässig durchgeführt werden, wenn die Vernetzungsmittel bzw. -mischungen in Behältern verpackt vorliegen. Allein durch Austausch eines Behälters kann dann ein Produktwechsel durchgeführt werden. Eine vorhergehende Entleerung und Reinigung von Behältern ist nicht erforderlich.

In den Fällen, in denen bei dem erfindungsgemäßen Verfahren Produktwechsel durchgeführt werden, ist dies einfach dadurch möglich, dass dafür nur der Behälter mit Vernetzungsmitteln ausgetauscht und so ein anderes Produkt hergestellt wird.

Bei dem erfindungsgemäßen Verfahren können die Vernetzungsmittel kontinuierlich mit der Grundmischung vermischt werden, was eine bevorzugte Ausführungsform darstellt.

Es ist ebenfalls möglich, dass bei dem erfindungsgemäßen Verfahren die Vernetzungsmittel mit markierenden Stoffen versehen sind, deren Verteilung während der Durchführung des Verfahrens kontinuierlich überprüft wird.

In diesem Fall liegt der Anteil der markierenden Stoffe vorzugsweise bei weniger als 50 Gew.-%, bevorzugt bei weniger als 5 Gew.-%, besonders bevorzugt bei weniger als 1 Gew.-% bezogen auf die miteinander vermischten Vernetzungsmittel.

Das beschrieben Mischverfahren kann zur Herstellung verschiedener technischer Gummiartikel insbesondere für Extrusionsanwendungen wie Profile, schläuche, etc. verwendet werden. Daneben ist dieses kontinuierliche Mischverfahren für Mischungen mit einem hohen Durchsatz wie zum Beispiel Reifenlaufflächenmischungen sehr sinnvoll.

Die nachstehenden Beispiele dienen der Erläuterung der Erfindung, ohne dabei limitierend zu wirken.

### Ausführungsbeispiele:

### Phr entspricht dabei "per hundred parts of rubber"

### Ausführungsbeispiel 1:

Eine Grundmischung bestehend aus 100 phr Naturkatuschuk (Standard Malaysian Rubber SMR 10) und 55 phr Ruß N550, 5 phr eines Weichmachers (Mineralöl Vivatec 500) und 1 phr Stearinsäure wurde mit einem Einwellen-Extruder mit Zahnradpumpe kontinuierlich extrudiert. Die Temperatur der Mischung betrug am Extruderkopf ca. 100°C. Der Durchsatz betrug 44 kg/h. Zu der Grundmischung wurde mittels einer Dosiervorrichtung, bestehend aus einer Zahnradpumpe und einer Förderschnecke eine Vernetzermischung bestehend aus 43 % Zinkoxid ZnO, 18,5% des Beschleunigers CBS, 18,5% Schwefel S und eines Bindermaterials (19%)aus EPDM mit einer Markersubstanz (Baumwollfaser), sowie einer im UV-Licht fluoreszierende Markersubstanz (1% Baumwollfasern) zudosiert. Der Druck der Dosiervorrichtung betrug ca. 80 bar, die Fördermenge ca. 2 kg/h. Die kontinuierliche Dosierung entspricht damit einer Zugabe von 8,125 phr der Vernetzermischung zu der Grundmischung. Nach einer Vorlaufphase von ca. 15 min. wurden nach Zeitinterwallen von 2 min. ca. 1 m lange Extruderstreifen als Probe gezogen. Aus diesen Extruderstreifen wurden 5 Proben zur Bestimmung der Vulkanisationskurven bei 150°C (mittels RPA 2000, Frequenz 1 Hz, 1 % Dehnungsamplitude) an unterschiedlichen Stellen entnommen. Zudem wurde weiteres Material aus den Extruderstreifen nach 2 min. entnommen, um hieraus 2 mm Platten für Zugversuche nach DIN 53 504 herzustellen (Vulkanisation der Platten bei 160°C für 10 min. in einer Vulkanisationspresse).

Zur Beurteilung der Homogenität wurde die Differenz aus dem maximalen komplexen Drehmoment S*max. und dem minimalen komplexen Drehmoment S*min (mittels RPA 2000, Frequenz 1 Hz, 1% Dehnungsamplitude) der Vulkanisationskurven in Tabelle 1 herangezogen. Die Standardabweichung der Werte S*max.-S*min. aus den Vulkanisationskurven ist bei allen fünf Proben der jeweiligen Extruderstreifens wach x min. der Probennahme gering (< 1%). Ebenso ist die Standardabweichung der Vulkanisationskurven der Proben verschiedener Extruderstreifen gering (< 1%). Der Mittelwert aller Proben beträgt 2,18 Nm bei einer Standardabbweichung von 0,61 %. Damit belegen diese Messwerte die exzellente Verteilung der Vernetzungschemikalien in der Kautschukmischung.

Die Werte (Spannwerte, Zugfestigkeit, Bruchdehnung) der 10 Zugversuche für die Probe 2 (Probennahme nach 2 Minuten) sind in Tabelle 2 dargestellt. Die Standardabweichung der Werte von 10 Zugversuchen eines Extruderstreifens ist gering (< 5%).

Zum Vergleich wurden mit einem herkömmlichen diskontinuierlichen Mischverfahren die polymergebundenen Vernetzungschemikalien (8,125 phr) mit einer Laborwalze in die NR-Grundmischung (161 phr) eingebracht. Dabei wurde eine sehr homogene Mischung (Einarbeitungszeit > 5 min.) und eine eher heterogene Mischung (Einarbeitungszeit ca. 1 min.) hergestellt. Aus diesen Mischungen wurden wie oben beschrieben 2 mm Platten hergestellt und jeweils 10 Zugversuche durchgeführt. Die Mittelwerte aus diesen Messungen (Spannwert, Zugfestigkeit, Bruchdehnung) der Zugversuche dieser Mischungen sind ebenfalls in Tabelle 2 dargestellt. Hier zeigt sich, dass die Mischung mit der geringen Einarbeitungszeit eine hohe Standardabweichung (>> 10%) der Werte für den Spannwert, der Zugfestigkeit und der Bruchdehung aufweist, während die Standarabweichung der Zugdehungskurven mit einer hohen Einarbeitungszeit gering (< 5%) ist.
Dies zeigt, dass mit dem neuen Mischverfahren für Vernetzungsmittel Mischungen mit einer homogenen Verteilung der
Vernetzungschemikalien hergestellt werden können. Die Homogenität der vernetzbaren Kautschukmischungen bewirkt eine sehr geringe Standardabweichung (< 1 %) der Messwerte (S*max.-S*min.) aus den Vulkanisationskurven aus. Diese Homogenität spiegelt sich ebenfalls in der geringen Standardabweichung der Werte der Zugversuche (<5%)wieder, die vergleichbar ist mit Homogenität der Mischung hergestellt mit herkömmlichen diskontinuierlichen Standard Walzenverfahren (lange Einarbeitungszeit).

Die im UV-Lichtfluoreszierende Markersubstanz (Baumwollfaser) kann mit dem Lichtmikroskop im UV-Licht detektiert werden. Es sind Fasern << 500 µm erkennbar, was die homogene Verteilung in den Proben zeigt.

**Tabelle 1**

| | **Probennahme nach x [min.]** | | | | | |
|---|---|---|---|---|---|---|
| **Proben-Nr.** | 0 | 2 | 4 | 6 | 8 | 10 |
| S*max - S*min als Mittelwert über 5 Proben [Nm] | 2,21 | 2,23 | 2,11 | 2,13 | 2,17 | 2,25 |
| Standardabweichung | 0,79% | 0,30% | 0,72% | 0,78% | 0,56% | 0,52% |

**Tabelle 2**

| Probe-Nr | Spannwert | Standardabweichung Spannwert | Zugfestigkeit | Standardabweichung Zugfestigkeit | Bruchdehnung | Standardabweichung Bruchdehnung |
|---|---|---|---|---|---|---|
| | [MPa] | | [MPa] | | [%] | |
| Erfindungsgemäß Probe 2 | **1,31** | **4,67%** | **24,91** | **2,82%** | **496** | 2,58% |
| Vergleich Laborwalze 5 min | **1,37** | **3,96%** | **24,05** | **2,65%** | **481** | 2,76% |
| Vergleich Laborwalze 1 min | **1,31** | **19,62%** | **12,88** | **44,14%** | **325** | 38,55% |

Die Messwerte sind dabei die Mittelwerte aus 10 Einzelmessungen.

### Ausführungsbeispiel 2:

Die Grundmischung bestehend aus 100 phr Naturkatuschuk (Standard Malaysian Rubber SMR 10) und 55 phr Ruß N550, 5 phr eines Weichmachers (Vivatec 500) und 1 phr Stearinsäure wurde entsprechend Ausführungsbeispiel 1 in einem Einwellen- Extruder extrudiert. Zu dieser Mischung wurde in einem ersten Versuch 7,5 phr Pulverchemikalien, bestehend aus 48% Zinkoxid ZnO, 20,5% Mercaptobenzothiazyldisulfid (MBTS), 11% eines Zinkdithiophosphat (des Typs Rhenocure ® ZBOP/S der Firma Rhein Chemie Rheinau GmbH) und 20,5% Schwefel S, drucklos mittels eines Pulverdosiers hinzugegeben (Versuch A, Vergleichsversuch) . In einem zweiten Versuch B (erfindungsgemäß) wurde ein polymer-gebundener Chemikalienbatch, bestehend aus einem polymeren EPDM-binder 20%, 5 % eines lumineszierenden Markers (Dialuminium-x-Dysprosium-y-Europium-(1-x-y)-Strontiumtretroxid) und 48% Zinkoxid ZnO, 20,5% Mercaptobenzothiazyldisulfid MBTS, 11% eines Zinkdithiophosphat (Handelsname Rhenocure ®ZBOP/S der Firma Rhein Chemie Rheinau GmbH) und 20,5% Schwefel S hergestellt. Dabei handelt es sich um die erfindungsgemäße vorgemischte Vernetzermischung (Chemikalienbatch). Diese wird anschließend mit einem Druck von ca. 100 bar zur Kautschukmischung hinzudosiert. Der Chemikalienbatch wurde dabei in einem Innenmischer (1,5 l Kammervolumen) nach herkömmlichen Standardmischverfahren (70% Füllgrad, 50 rpm, 50°C, 5 Minuten Mischdauer) hergestellt. Die Temperatur der Mischung nach Austritt aus dem Einwellen- Extruder betrug in beiden Fällen ca. 100°C.

Die beiden so erhaltenen Extruderstreifen aus Versuch A und B wurden optisch miteinander verglichen. Es zeigt sich, dass im Extruderstreifen des Versuches A (Vergleichsversuch, drucklose Zudosierung des Pulvergemisches) ein Grossteil der Vernetzungschemikalien zwar gleichmäßig verteilt, aber nicht ausreichend dispergiert wurde. Es ist eine nicht akzeptable Zahl an gelblich-weißen Stippen vorhanden, während solche Stippen im Laufstreifen aus Versuch B nach dem erfindungsgemäßen Verfahren mit dem vordispergierten Chemikalienbatch nicht gefunden werden.

Zur weiteren Bestimmung der Mischungshomogenität wurden zehn verschiedene Proben nach ca. 10 min. nach Versuchstart für Versuch A und Versuch B entnommen (und in einem Vulkameter der Firma α-Technolgies bei 160°C gemessen)). Es wird für beide Versuche nur eine geringe Standardabweichung der Werte S*max.-S*min von < 1 % festgestellt, was für eine homogene Verteilung spricht. In Versuch A liegt jedoch das Vulkanisationsplateau S*max bei 1,3 Nm deutlich niedriger als in Versuch B mit S*max = 1,5 Nm .

Die Pulverchemikalien aus Versuch A sind zwar homogen verteilt aber nicht ausreichend dispergiert, sodass die Vernetzungsdichte erniedrigt ist, im Gegensatz zum erfindungsgemäßen polymergebundenen vordispergierten Chemikalienbatch.

Der Unterschied zeigt sich auch in den Zug-Dehnungskurven der Vulkanisate (Vulkanisation bei 160°C in der Vulkansiationspresse für 10 min.). Die Spannwerte z.B. bei 100% Dehnung sind im Falle der NR-Vulkanisate aus Versuch A signifikant geringer als diejenigen der NR-Vulkanisate aus Versuch B. Zudem werden trotz der höheren Spannwerte der NR-Vulkanisate aus Versuch B auch höhere Werte für die Bruchdehnung und die Zugfestigkeit erhalten. Bei Versuch A liegt die mittlere Zugfestigkeit bei ca. 15 MPa und die mittlere Bruchdehnung bei ca. 400%, während die mittlere Zugfestigkeit der Vulkanisate aus Versuch B bei 22 MPa und die mittlere Bruchdehnung bei 490% liegt. Zudem ist die Standardabweichung der Werte aus Versuch B deutlich geringer als diejenige aus Versuch A.

Die lumineszierende Markersubstanz (Dialuminium-x-Dysprosium-y-Europium-(1-x-y)-Strontiumtretroxid) kann mit dem Lichtmikroskop im UV-Licht detektiert werden. Es sind Partikel < 100 µm erkennbar, was die homogene Verteilung in den Proben zeigt.

## Patentansprüche

1. Verfahren zur Herstellung einer vernetzbaren Kautschukmischung, bei dem Vernetzungsmittel für das Vernetzen so miteinander vermischt werden, so dass eine Schmelzpunkterniedrigung auf weniger als 120°C erfolgt und anschließend die miteinander vermischten Vernetzungsmittel mit einer diskontinuierlich hergestellten Grundmischung, die Kautschuk enthält, vermischt werden, wobei während des Mischens mit der Grundmischung Temperaturen erzeugt werden, die oberhalb dieser Schmelztemperatur und unterhalb von 150°C liegen.

2. Verfahren nach Anspruch 1, **dadurch gekennzeichnet, dass** während des Mischens mit der Grundmischung Temperaturen erzeugt werden, die oberhalb dieser Schmelztemperatur und unterhalb 120°C liegen.

3. Verfahren nach einem der vorhergehenden Ansprüche, bei dem Vernetzungsmittel für das Vernetzen einer Mischung mit Polymeren umhüllt werden und die mit Polymeren umhüllten Vernetzungsmittel mit einer Grundmischung, die Kautschuk enthält, gemischt werden.

4. Verfahren nach einem der vorhergehenden Ansprüche, bei dem Vernetzungsmittel für das Vernetzen einer Mischung mit hohem Druck von vorzugsweise wenigstens 50 bar in eine Grundmischung gepumpt werden, die Kautschuk enthält, und anschließend die Grundmischung mit den Vernetzungsmitteln in einer Mischvorrichtung gemischt wird.

5. Verfahren nach einem der vorhergehenden Ansprüche, bei dem die miteinander vermischten Vernetzungsmittel in einen Behälter gefüllt werden, der Behälter verschlossen wird, der verschlossene Behälter mit einer Vorrichtung für das Mischen der Grundmischung mit den Vernetzungsmitteln verbunden und geöffnet wird, die Vernetzungsmittel aus dem Behälter der Grundmischung zugeführt werden und die zugeführten Vernetzungsmittel mit der Grundmischung vermischt werden.

6. Verfahren nach einem der vorhergehenden Ansprüche, bei dem die Vernetzungsmittel kontinuierlich mit der Grundmischung vermischt werden.

7. Verfahren nach einem der vorhergehenden Ansprüche, bei dem die miteinander vermischten Vernetzungsmittel Schwefel, Peroxide, Metalloxide, Fettsäuren und/oder Dithiocarbamate, Tetramethylthiuramdisulfid (TMTD), Tetramethylthiurammonosulfid (TMTM), Tetraethylthiuramdisulfid (TETD), Bis(pentamethylene)-thiuramtetrasulfide (DPTT), Ethylenthioharnstoff (ETU), N,N,N',N'-Tetramethylthioharnstoff (TMTU), Diethylthioharnstoff (DETU), Dibutylthioharnstoff (DBTU), 2-Mercapto-benzothiazol (MBT), Mercaptobenzothiazyldisulphid (MBTS), Zincmercaptobenzothiazol (ZMBT), N'-Cyclohexylbenzothiazol-2-sulfenamid (CBS), N-tert-Butyl-2-benzothiazol-sulfenamid (TBBS), 2-Morpholinbenzothiazol-sulfenamid (MBS), Dithiophosphate, Diphenylguanidin (DPG) und/oder N',N-di-ortho-tolyl -Guanidine (DOTG), verfärbende und nicht verfärbende Alterungsschutzmittel, Paraphenylendiamine, Isopropylphenylparaphenylendiamin (IPPD), Para-Phenylen-Diamin (6PPD), N,N-ditoly-p-phenylen diamine (DTPD),Trimethyl-1,2-dihydrochinolin (TMQ), (Phenyl)amine]-1,4-naphthalendion (PAN), Bis(4-octylphenyl)amin (ODPA), styrolisiertes Diphenylamin (SDPA), Mono- und Bisphenole, Mercaptobenzimidazole, 2-Mercaptobenzimidazol (MBI), 2-Mercaptomethylbenzimidazole (MMBI), Zinc-4- und -5-methyl-2-mercapto-benzimidazole (ZMMBI), Olefine, paraffinische und/oder aromatische Weichmacher enthalten.

8. Verfahren nach einem der vorhergehenden Ansprüche, bei dem die Vernetzungsmittel mit markierenden Stoffen versehen sind, deren Verteilung Während der Durchführung des Verfahrens kontinuierlich überprüft wird.

9. Verfahren nach dem vorhergehenden Anspruch, bei dem der Anteil der markierenden Stoffe weniger als 50 Gew.-%, bevorzugt weniger als 5 Gew.-%, bezogen auf die miteinander vermischten Vernetzungsmittel beträgt.

## Claims

1. Process for the preparation of a crosslinkable rubber mixture, in which crosslinking agents for crosslinking are mixed with one another such that a melting point depression to less than 120°C takes place and the crosslinking agents mixed with one another are then mixed with a discontinuously produced base mixture which contains rubber, wherein temperatures which are above this melting point and below 150°C are generated during the mixing with the base mixture..

2. Process according to Claim 1, **characterized in that** temperatures which are above this melting point and below 120°C are generated during the mixing with the base mixture.

3. Process according to either of the preceding claims, in which crosslinking agents for crosslinking a mixture are coated with polymers, and the crosslinking agents coated with polymers are mixed with a base mixture which contains rubber.

4. Process in particular according to any of the preceding claims, in which crosslinking agents for crosslinking a mixture are pumped at high pressure of preferably at least 50 bar into a base mixture which contains rubber, and the base mixture is then mixed with the crosslinking agents in a mixing apparatus.

5. Process according to any of the preceding claims, in which the crosslinking agents mixed with one another are introduced into a container, the container is closed, the closed container is connected to an apparatus for mixing the base mixture with the crosslinking agents and is opened, the crosslinking agents are fed from the container to the base mixture, and the crosslinking agents fed in are mixed with the base mixture.

6. Process according to any of the preceding claims, in which the crosslinking agents are mixed continuously with the base mixture.

7. Process according to any of the preceding claims, in which the crosslinking agents mixed with one another contain sulphur, peroxides, metal oxides, fatty acids and/or dithiocarbamates, tetramethylthiuram disulphide (TMTD), tetramethylthiuram monosulphide (TMTM), tetraethylthiuram disulphide (TETD), bis(pentamethylene)thiuram tetrasulphide (DPTT), ethylenethiourea (ETU), N,N,N'N'-tetramethylthiourea (TMTU), diethylthiourea (DETU), dibutylthiourea (DBTU), 2-mercaptobenzothiazole (MBT), mercaptobenzothiazyl disulphide (MBTS), zinc mercaptobenzothiazole (ZMBT), N'-cyclohexylbenzothiazole-2-sulphenamide (CBS), N-tert-butyl-2-benzothiazolesulphenamide (TBBS), 2-morpholinebenzothiazolesulphenamide (MBS), dithiophosphates, diphenylguanidine (DPG) and/or N'N-di-ortho-tolylguanidine (DOTG), discolouring and non-discolouring antiageing agents, paraphenylenediamines, isopropylphenylparaphenylenediamine (IPPD), paraphenylenediamine (6PPD), N,N-ditoly-p-phenylenediamine (DTPD), trimethyl-1,2-dihydroquinoline (TMQ), [(phenyl)amine]-1,4-naphthalenedione (PAN), bis(4-octylphenyl)amine (ODPA), styrenated diphenylamine (SDPA), mono- and bisphenols, mercaptobenzimidazoles, 2-mercaptobenzimidazole (MBI), 2-mercaptomethylbenzimidazoles (MMBI), zinc 4- and -5-methyl-2-mercaptobenzimidazoles (ZMMBI), olefins, paraffinic and/or aromatic plasticizers.

8. Process according to any of the preceding claims, in which the crosslinking agents are provided with marking substances whose distribution is continuously checked while the process is being carried out.

9. Process according to the preceding claim, in which the proportion of the marking substances is less than 50% by weight, preferably less than 5% by weight, based on the crosslinking agents mixed with one another.

## Revendications

1. Procédé de fabrication d'un mélange de caoutchouc réticulable, selon lequel des agents de réticulation pour la réticulation sont mélangés les uns avec les autres de sorte qu'un abaissement du point de fusion à moins de 120 °C ait lieu, puis les agents de réticulation mélangés les uns avec les autres sont mélangés avec un mélange de base fabriqué de manière discontinue, qui contient un caoutchouc, des températures supérieures à cette température de fusion et inférieures à 150 °C étant générées pendant le mélange avec le mélange de base.

2. Procédé selon la revendication 1, **caractérisé en ce que** des températures supérieures à cette température de fusion et inférieures à 120 °C sont générées pendant le mélange avec le mélange de base.

3. Procédé selon l'une quelconque des revendications précédentes, selon lequel des agents de réticulation pour la réticulation d'un mélange sont enrobés avec des polymères et les agents de réticulation enrobés avec des polymères sont mélangés avec un mélange de base qui contient un caoutchouc.

4. Procédé selon l'une quelconque des revendications précédentes, selon lequel des agents de réticulation pour la réticulation d'un mélange sont pompés dans un mélange de base, qui contient un caoutchouc, à une pression élevée de préférence d'au moins 50 bar, puis le mélange de base est mélangé avec les agents de réticulation dans un dispositif de mélange.

5. Procédé selon l'une quelconque des revendications précédentes, selon lequel les agents de réticulation mélangés les uns avec les autres sont placés dans un contenant, le contenant est fermé, le contenant fermé est raccordé avec un dispositif pour le mélange du mélange de base avec les agents de réticulation et ouvert, les agents de réticulation sont introduits dans le mélange de base à partir du contenant, et les agents de réticulation introduits sont mélangés avec le mélange de base.

6. Procédé selon l'une quelconque des revendications précédentes, selon lequel les agents de réticulation sont mélangés en continu avec le mélange de base.

7. Procédé selon l'une quelconque des revendications précédentes, selon lequel les agents de réticulation mélangés les uns avec les autres contiennent du soufre, des peroxydes, des oxydes de métaux, des acides gras et/ou des dithiocarbamates, du disulfure de tétraméthylthiuram (TMTD), du monosulfure de tétraméthylthiuram (TMTM), du disulfure de tétraéthylthiuram (TETD), du tétrasulfure de bis(pentaméthylène}-thiuram (DPTT), de l'éthylènethiourée (ETU), de la N,N,N',N'-tétraméthylthiourée (TMTU), de la diéthylthiourée (DETU), de la dibutylthiourée (DBTU), du 2-mercaptobenzothiazole (MBT), du disulfure de mercaptobenzothiazyle (MBTS), du mercaptobenzothiazole de zinc (ZMBT), du N'-cyclohexylbenzothiazole-2-sulfénamide (CBS), du N-tert-butyl-2-benzothiazole-sulfénamide (TBBS), du 2-morpholine-benzothiazole-sulfénamide (MBS), des dithiophosphates, de la diphénylguanidine (DPG) et/ou des N',N-di-ortho-tolyl-guanidines (DOTG), des agents antivieillissement colorants et non colorants, des paraphénylènediamines, de l'isopropylphénylparaphénylènediamine (IPPD), de la para-phénylène-diamine (6PPD), des N,N-ditoly-p-phénylènediamines (DTPD), de la triméthyl-1,2-dihydroquinoline (TMQ), de la (phényl)amine-1,4-naphtalènedione (PAN), de la bis(4-octylphényl)amine (ODPA), de la diphénylamine styrénisée (SDPA), des mono- et bisphénols, des mercaptobenzimidazoles, du 2-mercaptobenzimidazole (MBI), des 2-mercaptométhylbenzimidazoles (MMBI), des 4- et -5-méthyl-2-mercapto-benzimidazoles de zinc (ZMMBI), des oléfines, des plastifiants paraffiniques et/ou aromatiques.

8. Procédé selon l'une quelconque des revendications précédentes, selon lequel les agents de réticulation sont munis de substances marquantes, dont la répartition est surveillée en continu pendant la réalisation du procédé.

9. Procédé selon la revendication précédente, selon lequel la proportion des substances marquantes est de moins de 50 % en poids, de préférence de moins de 5 % en poids, par rapport aux agents de réticulation mélangés les uns avec les autres.
